# FASCICULE DE BREVET EUROPEEN

(11) **EP 3 391 444 B1**
(45) Date de publication et mention de la délivrance du brevet: **18.03.2020**
(21) Numéro de dépôt: 16825513.1
(22) Date de dépôt: 14.12.2016
(51) Int. Cl.: H01M 8/0273, H01M 8/0286, H01M 8/2404, H01M 8/028

(54) **PROCÉDÉ DE FABRICATION DE PILE À COMBUSTIBLE AVEC JOINT SÉRIGRAPHIÉ**
VERFAHREN ZUR HERSTELLUNG EINER BRENNSTOFFZELLE MIT SIEBGEDRUCKTER DICHTUNG
METHOD FOR PRODUCING A FUEL CELL WITH A SCREEN-PRINTED SEAL

(30) Priorité: 16.12.2015 FR 1562439
(43) Date de publication de la demande: 24.10.2018
(73) Titulaire: Compagnie Générale des Etablissements Michelin, 63000 Clermont-Ferrand (FR)
(72) Inventeur: GRANDJEAN, Arnaud, 63040 Clermont-Ferrand Cedex 9 (FR)
(74) Mandataire: Roussy, Delphine
(86) Numéro de dépôt international: PCT/FR2016/053424
(87) Numéro de publication internationale: WO 2017/103475

(56) Documents cités:
- EP-A2- 1 453 120
- KR-A- 20140 030 715
- US-A1- 2002 094 464
- US-A1- 2008 105 354

## Description

### DOMAINE DE L'INVENTION

La présente invention concerne le domaine des piles à combustibles, et plus particulièrement le domaine de la fabrication et de l'assemblage de piles à combustible.

Une pile à combustible permet la génération d'énergie électrique par une réaction électrochimique à partir d'un carburant, généralement de l'hydrogène, et d'un comburant, généralement de l'oxygène.

Une pile à combustible du type à membrane échangeuse de protons à électrolyte solide (PEMFC) comprend habituellement un empilement de cellules élémentaires, en forme de plaques, constituant des générateurs électrochimiques, chacune des cellules étant séparée des cellules adjacentes par des plaques bipolaires. Chaque cellule comprend un élément anodique et un élément cathodique, séparés par un électrolyte solide sous la forme d'une membrane échangeuse d'ions, réalisée par exemple en un matériau polymère perfluoré sulfuré. Cet ensemble comprenant l'élément cathodique, l'élément anodique et l'électrolyte solide forme un assemblage membrane-électrode, également appelé AME.
Le document US2002/094464 décrit une pile à combustible dans laquelle les plaques bipolaires intègrent des joints d'étanchéité qui viennent au contact de la membrane.

En outre, ces assemblages sont régulièrement complétés par l'ajout de renforts, ainsi que décrits dans le document US2008/0105354, formés à partir de films polymères, et qui permettent d'éviter la détérioration des AME en facilitant la manipulation des assemblages, ou encore en limitant les variations dimensionnelles de la membrane en fonction de la température et de l'humidité. Ces renforts sont généralement superposés à la périphérie des électrodes. En outre, des couches de diffusion gazeuse sont interposées entre les électrodes et les plaques bipolaire.

Selon une variante de réalisation habituelle, chaque plaque bipolaire assure d'un côté l'alimentation en carburant de la cellule adjacente à ce côté et de l'autre côté l'alimentation en comburant de la cellule adjacente à cet autre côté, les alimentations assurées par les plaques bipolaires se faisant en parallèle. Des couches de diffusion de gaz, par exemple réalisées en tissu de carbone, sont installées de part et d'autre des AME pour assurer la conduction électrique et l'arrivée homogène des gaz réactifs fournis via les plaques bipolaires.

L'empilage successif des plaques bipolaires, des couches de diffusion de gaz et des AME est maintenu sous des pressions d'appui devant garantir un bon contact électrique et

L'empilage successif des plaques bipolaires, des couches de diffusion de gaz et des AME est maintenu sous des pressions d'appui devant garantir un bon contact électrique et une bonne étanchéité. Toutefois, le maintien sous pression n'est pas suffisant pour garantir une étanchéité parfaite. Il s'avère utile de disposer, entre l'assemblage membrane électrode et la plaque bipolaire, d'un joint, réalisé par exemple en silicone ou en EPDM.

On connaît plusieurs méthodes pour fabrique un tel joint, par exemple le moulage ou la découpe. Toutefois, ces méthodes présentent différents inconvénients. Ainsi, la fabrication par découpe conduit à un taux de déchet de matière important, et présence une difficulté technique pour la mise en place. La fabrication par moulage, quant à elle, est complexe à mettre en place, et nécessite l'utilisation d'un outillage onéreux. En outre, la fabrication par moulage ne permet pas de déposer directement un joint sur un renfort.

La présente invention vise donc à proposer un procédé de fabrication de pile à combustible permettant de remédier à cet inconvénient.

### BREVE DESCRIPTION DE L'INVENTION

Ainsi, l'invention concerne un procédé de fabrication de pile à combustible comprenant un empilement de cellules élémentaires séparées par des plaques bipolaires, le procédé comprenant les étapes suivantes, chaque cellule élémentaire comprenant au moins un élément anodique et un élément cathodique séparés par une membrane échangeuse d'ions, un élément de renfort et une couche de diffusion gazeuse, le procédé comprenant les étapes suivantes:
- Une étape de fabrication par sérigraphie d'un joint silicone,
- Une étape de positionnement du joint silicone sur l'élément de renfort,
- Une étape d'assemblage des éléments constitutifs d'une cellule élémentaire, et
- Une étape de positionnement d'une plaque bipolaire de part et d'autre de la cellule élémentaire,
Ces étapes étant répétées autant de fois que nécessaire en fonction de la taille de l'empilement souhaité.

Ainsi, dans un procédé selon l'invention, le joint sérigraphié est déposé sur le renfort avant que l'assemblage membrane-électrode soit réalisé. En effet, on a constaté que si on assemble au préalable l'ensemble des éléments constitutifs d'une cellule élémentaire, la couche de diffusion gazeuse est plus haute que le renfort, et cette épaisseur ainsi créée gêne la sérigraphie et dégrade ainsi la qualité du joint déposé. En outre, la production de joint par sérigraphie, qui sera ultérieurement détaillée, nécessite l'utilisation de solvants, qui peuvent polluer la membrane lors du dépôt. Enfin, le dépôt par sérigraphie n'étant pas infaillible, il est préférable, en cas de joint défectueux, de pouvoir remplacer uniquement l'élément de renfort, sans avoir à remplacer tous les éléments constitutifs de l'assemblage.

L'utilisation de la sérigraphie pour la fabrication des joints présente de nombreux avantages parmi lesquels :
- une utilisation minimale de produit.
- la possibilité d'une adaptation rapide du motif ou de l'épaisseur
- des faibles coûts de mise en place et de matériau,
- une bonne répétabilité
- une épaisseur de joint quasi-constante,
- la possibilité d'effectuer de la dépose en grande série sur des rouleaux.

Dans un mode de réalisation particulier, l'étape de fabrication par sérigraphie d'un joint silicone comprenant les étapes suivantes :
- On fabrique un écran, également appelé cadre, permettant de faire apparaître le motif de joint souhaité,
- On dépose, sur le cadre, une quantité de silicone dépendant de la taille du cadre,
- On passe sur le cadre un objet de type racle, permettant de déformer le cadre et de faire traverser le silicone aux endroits prévus du motif,
- On retire ensuite le cadre et on passe le joint dans un four pour permettre sa polymérisation.

Dans un autre aspect de l'invention, il est possible d'utiliser un silicone qui polymérise lors de l'exposition à des rayonnements Ultra-Violets. Toutefois, un tel silicone est plus cher et plus fragile, et ne représente donc pas une solution préférentielle.

Dans un mode de réalisation particulier, l'écran est réalisé en un tissu en PET, formant un treillis, dont les pores sont bouchés, à l'exception de ceux permettant de former le motif souhaité.

Dans ce mode de réalisation, le joint en silicone est déposé à travers des mailles d'un treillis, ce qui crée des micro-aspérités. Afin d'éviter que ces micro-aspérités ne diminuent l'étanchéité du joint, il est nécessaire qu'elles soient comblées au cours de la fabrication du joint. Ainsi, dans un mode de réalisation avantageux, le procédé de fabrication du joint comprenant, avant l'étape de passage du joint dans un four, une étape de repos du joint permettant aux micro-aspérités de se combler d'elles-mêmes. Ceci est rendu possible grâce aux propriétés du silicone. Le temps de repos nécessaire est généralement de l'ordre d'une à deux minutes.

De manière préférentielle, les silicones utilisés sont de type RTV2 (où RTV signifie "Room Temperature Vulcanisation"). Le mélange silicone est composé d'au moins un polyorganosiloxane présentant, par molécule, au moins deux groupes vinyle et d'au moins un polyorganosiloxane présentant, par molécule, au moins deux atomes d'hydrogène liés au silicium (SiH) et un catalyseur, de préférence composé d'au moins un métal appartenant au groupe du platine.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 montre un exemple de plaque bipolaire pour pile à combustible présentant une gorge destinée à permettre la présence d'un joint sérigraphié.
- la figure 2 montre un écran pour sérigraphie,
- la figure 3 montre une vue de côté d'une racle utilisée dans le cadre de la fabrication d'un joint par sérigraphie
- les figures 4 et 5 montrent deux configurations.

### DESCRIPTION DU MEILLEUR MODE DE REALISATION DE L'INVENTION

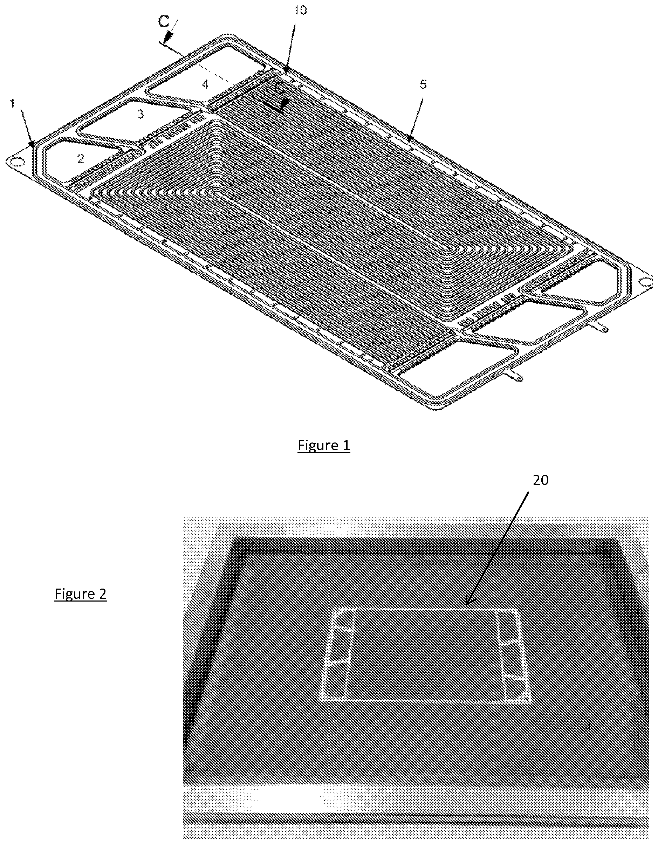

Une plaque bipolaire telle que montrée en figure 1 comprend un squelette central 11 constitué de deux plaques minces, parallèles, solidarisées par un procédé tel que le collage, la soudure ou encore la brasure. Une face de cette plaque est destinée à être adossée à une anode, dans une pile à combustible, et l'autre face est destinée à être adossée à une cathode. Les plaques minces sont percées de plusieurs trous à leur périphérie, afin de former des collecteurs de carburant 2, comburant 3, et de liquide de refroidissement 4. Les plaques comportent également un ensemble de canaux 5, ménagés dans leur épaisseur, afin de permettre la circulation, en surface, de carburant ou de comburant. Par ailleurs, les plaques minces comportent des orifices permettant de faire communiquer un collecteur avec un canal de circulation de gaz.

Le joint fabriqué par sérigraphie est destiné à être apposé à l'emplacement 10 indiqué sur cette figure 1. Ce joint doit donc présenter un motif 20 du type de celui apparaissant sur l'écran montré en figure 2. On précise ici qu'il existe plusieurs types de plaques bipolaires, présentant chacun des motifs différents. Ainsi, le motif montré sur la figure 2 ne correspond pas à la plaque bipolaire de la figure 1. On présente à dessein deux motifs différents couverts par la présente invention dont l'application n'est pas limitée à un type de plaque bipolaire particulier.

Cet écran, également appelé cadre, est formé d'un tissu en PET dont les mailles et le diamètre de fil peuvent être adaptés aux différentes utilisations. Le tissu est ensuite enduit d'un produit photosensible appelé émulsion sur lequel est déposé un chablon correspondant au motif à réaliser. Après avoir subi une exposition à une lampe UV, le produit photosensible durcit à l'exception de la zone masquée par le chablon. Le surplus est ensuite nettoyé. Ainsi, tous les pores du treillis, à l'exception de la zone du motif, sont bouchés afin de ne laisser passer le produit que dans les zones désirées.

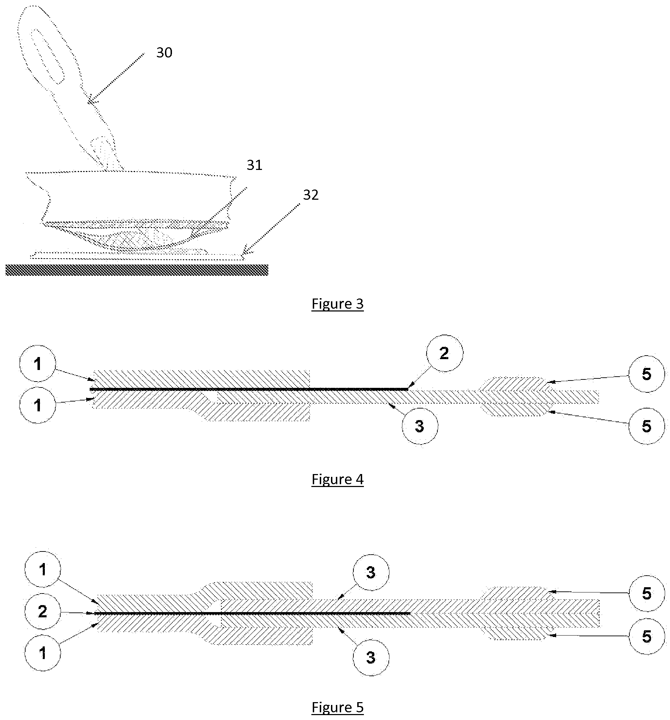

Une fois ce cadre, ou écran, fabriqué, il est alors possible de fabriquer un joint, en utilisant un procédé tel qu'illustré en figure 3.

Tout d'abord, on dispose le cadre sur le support sur lequel sera déposé le joint. Le cadre est installé un peu au-dessus du support de manière à éviter un contact entre les deux avant le passage de la racle. Le produit à déposer, par exemple, du silicone, est coulé en vrac dans le cadre.

Le produit est alors étalé de façon régulière sur le motif mais sans appuyer trop fort pour éviter de lui faire traverser le treillis. Cette opération est appelée « le nappage ».

Puis, une racle 30 formée d'un profil de polyuréthane ou métallique dont la dureté et la raideur peuvent être adaptées, est passée tout le long du profil avec un angle variable proche de 45°.

La racle va alors forcer le treillis 31 à se déformer, l'amenant au contact du support 32. Le silicone est ensuite forcé au passage de la racle à traverser le treillis pour venir se déposer sur le support. La racle permet aussi de racler le surplus de silicone à la surface de l'écran, celui-ci étant dès lors près pour une deuxième dépose.

Il est important de noter que l'épaisseur du joint que l'on veut obtenir est dépendante de nombreux facteurs, alors même que le contour est lui, simplement défini par l'écran.
Les paramètres ayant une influence sur l'épaisseur du joint sont classés par ordre décroissant. Ces paramètres peuvent être modifiés avant la mise en œuvre du procédé de fabrication par sérigraphie, en fonction des caractéristiques du joint souhaité. Ainsi, on précise ci-après des exemples de valeurs pour ces différents paramètres lors de la mise en œuvre d'un exemple de l'invention :
- le type de treillis : on utilise par exemple un treillis de type 27-140, c'est-à-dire 27 fils par centimètre, et des fils présentant un diamètre de 140 micromètres,
- la viscosité du silicone, par exemple 60 000 mpascal-seconde,
- l'angle de la racle, de préférence entre 30° et 50°,
- la force appliquée sur la racle, par exemple 40 N (4 kilogrammes) par 100 millimètres de racle,
- la dureté Shore A de la racle, de préférence entre 60 et 80 shore A
- la hauteur du hors cadre, qui est préférentiellement déterminée en fonction de la taille du cadre, par exemple Hauteur = Largeur de l'écran ^{∗} 0.006,
- la vitesse de passage de la racle, par exemple 50 millimètres par seconde.

Une fois le joint déposé il est nécessaire qu'il durcisse afin d'obtenir les caractéristiques permettant de réaliser une étanchéité. Dans un premier temps, le joint déposé est mis à reposer environ 1-2 minutes, le temps que les micro-aspérités dues au passage du treillis se comblent d'elles-mêmes. Le joint est ensuite passé dans un four à réglé sur une température située entre 80°C et 130°C. Si le four est réglé sur 130°C, le temps de polymérisation sera d'environ 10 minutes. L'utilisation d'une température basse, de l'ordre de 80°C, évite de dégrader l'élément sur lequel le joint est déposé.

De manière préférentielle, ainsi que précédemment mentionné, on utilisera un silicone de type RTV2. Ce silicone a une longue durée de vie en pot de l'ordre de 15h, permettant de réaliser la sérigraphie sans que le silicone durcisse avant la conformation.

Après fabrication du joint, il est possible de passer à l'étape d'assemblage de la cellule élémentaire, puis de la pile à combustible. Ainsi que précédemment indiqué, le joint est utilisé pour réaliser l'étanchéité entre une cellule élémentaire et la plaque bipolaire consécutive dans l'empilement.

Deux configurations différentes d'une cellule élémentaire sont montrées aux figures 4 et 5. Ces figures représentent une vue en coupe d'une partie d'un empilement.

Sur la figure 4, la membrane 2 est collée ou soudée sur un renfort 3.
- La couche de diffusion de gaz inférieure 1 est installée à cheval sur la membrane 2 et le renfort 3 sur lequel ont été, au préalable, déposé deux joints sérigraphiés 5 de part et d'autre.
- La couche de diffusion de gaz supérieure 1' est uniquement installée sur la membrane 2.
- Sur la figure 4 on constate que la membrane 2 dépasse des couches de diffusion de gaz. Il est toutefois possible que la membrane s'arrête à l'aplomb de ces couches.

Dans la configuration montrée en figure 5, la membrane 2 est installée entre deux renforts 3, ceux-ci sont collés ou soudés entre eux et sur la membrane
- Chacune des couches de diffusion de gaz 1 est respectivement installée à cheval sur la membrane 2 et un renfort 3.
- Dans cette configuration, les joints sérigraphiés 5 sont installés respectivement sur chacun des renforts.

## Revendications

1. Procédé de fabrication de pile à combustible comprenant un empilement de cellules élémentaires séparées par des plaques bipolaires, chaque cellule élémentaire comprenant au moins un élément anodique et un élément cathodique séparés par une membrane (2) échangeuse d'ions, et un élément de renfort (3) et une couche de diffusion gazeuse (1), le procédé comprenant les étapes suivantes :
- Une étape de fabrication par sérigraphie d'un joint silicone (5),
- Une étape de positionnement du joint silicone (5) sur l'élément de renfort (3),
- Une étape d'assemblage des éléments constitutifs d'une cellule élémentaire,
- Une étape de positionnement d'une plaque bipolaire de part et d'autre de la cellule élémentaire,
ces étapes étant répétées autant de fois que nécessaire en fonction de la taille de l'empilement souhaité.

2. Procédé de fabrication de pile à combustible selon la revendication 1, dans lequel l'étape de fabrication par sérigraphie d'un joint silicone (5) comprend les étapes suivantes :
- On fabrique un écran, également appelé cadre, permettant de faire apparaître le motif (20) de joint souhaité,
- On dépose, sur le cadre, une quantité de silicone dépendant de la taille du cadre,
- On passe sur le cadre un objet de type racle (30), permettant de déformer le cadre et de faire traverser le silicone aux endroits prévus du motif (20),
- On retire ensuite le cadre et on passe le joint dans un four pour permettre sa polymérisation

3. Procédé de fabrication de pile à combustible selon la revendication 2, dans lequel l'écran est réalisé en un tissu en PET formant un treillis.

4. Procédé de fabrication de pile à combustible selon la revendication 3, dans lequel la fabrication par sérigraphie du joint silicone (5) comprend avant l'étape de passage du joint dans un four, une étape de repos du joint permettant aux micro-aspérités de se combler d'elles-mêmes.

## Patentansprüche

1. Verfahren zur Herstellung einer Brennstoffzelle, das eine Stapelung von durch Bipolarplatten getrennten Elementarzellen enthält, wobei jede Elementarzelle mindestens ein Anodenelement und ein Kathodenelement, die durch eine Ionentauschermembran (2) getrennt sind, und ein Verstärkungselement (3) und eine Gasdiffusionsschicht (1) enthält, wobei das Verfahren die folgenden Schritte enthält:
- einen Schritt der Herstellung einer Silikondichtung (5) durch Siebdruck,
- einen Schritt der Positionierung der Silikondichtung (5) auf dem Verstärkungselement (3),
- einen Schritt des Zusammenbaus der wesentlichen Bestandteile einer Elementarzelle,
- einen Schritt der Positionierung einer Bipolarplatte zu beiden Seiten der Elementarzelle,
wobei diese Schritte abhängig von der Größe der gewünschten Stapelung so oft wie nötig wiederholt werden.

2. Verfahren zur Herstellung einer Brennstoffzelle nach Anspruch 1, wobei der Schritt der Herstellung einer Silikondichtung (5) durch Siebdruck die folgenden Schritte enthält:
- es wird ein auch Rahmen genannter Schirm hergestellt, der es ermöglicht, das gewünschte Dichtungsmuster (20) sichtbar zu machen,
- auf den Rahmen wird eine Silikonmenge abhängig von der Größe des Rahmens aufgebracht,
- ein Gegenstand von der Art Rakel (30) wird über den Rahmen geführt, der es ermöglicht, den Rahmen zu verformen und das Silikon an den vorgesehenen Stellen des Musters (20) durchtreten zu lassen,
- dann wird der Rahmen entfernt, und die Dichtung wird in einen Ofen gebracht, um ihre Polymerisierung zu erlauben.

3. Verfahren zur Herstellung einer Brennstoffzelle nach Anspruch 2, wobei der Schirm aus einem Gewebe aus PET hergestellt ist, das ein Gitter bildet.

4. Verfahren zur Herstellung einer Brennstoffzelle nach Anspruch 3, wobei die Herstellung der Silikondichtung (5) durch Siebdruck vor dem Schritt des Übergangs der Dichtung in einen Ofen einen Schritt der Ruhe der Dichtung enthält, um es den Mikro-Unebenheiten zu ermöglichen, sich von selbst zu füllen.

## Claims

1. Method for producing a fuel cell comprising a stack of unit cells separated by bipolar plates, each unit cell comprising at least an anode element and a cathode element which are separated by an ion-exchange membrane (2), and a reinforcing element (3) and a gas diffusion layer (1), the method comprising the following steps:
- a step of producing a silicone seal (5) by screen printing,
- a step of positioning the silicone seal (5) on the reinforcing element (3),
- a step of assembling the constituent elements of a unit cell,
- a step of positioning a bipolar plate on either side of the unit cell,
these steps being repeated as many times as needed depending on the size of the desired stack.

2. Method for producing a fuel cell according to Claim 1, wherein the step of producing a silicone seal (5) by screen-printing comprises the following steps:
- a screen, also called a frame, is produced, which makes it possible to display the desired seal pattern (20),
- a quantity of silicone that is dependent upon the size of the frame is deposited on the frame,
- a scraper-type object (30) is passed over the frame, which makes it possible to deform the frame and to pass the silicone through at the provided locations of the pattern (20),
- the frame is then removed, and the seal is passed into an oven to allow the polymerization thereof.

3. Method for producing a fuel cell according to Claim 2, wherein the screen is made from a PET fabric forming a canvas.

4. Method for producing a fuel cell according to Claim 3, wherein the production of the silicone seal (5) by screen printing comprises, before the step of passing the seal into an oven, a step of resting the seal allowing the micro-roughness to fill itself in.
